# EUROPÄISCHE PATENTANMELDUNG

(11) **EP 0 949 743 A2**
(43) Veröffentlichungstag der Anmeldung: **13.10.1999**
(21) Anmeldenummer: 99106572.3
(22) Anmeldetag: 31.03.1999
(51) Int. Cl.: H02K 7/10, H02K 7/102, B66B 11/04

(54) **Elektrische Maschine, insbesondere für Fahrstuhlantrieb**

(30) Priorität: 09.04.1998 DE 19815962
(71) Anmelder: ATB Antriebstechnik AG, 73642 Welzheim (DE)
(72) Erfinder: Rietzschel, Eckehard Dr., 51515 Kürten (DE); Wieland, Helmut, 73642 Welzheim (DE)
(74) Vertreter: Patentanwälte Ruff, Beier, Schöndorf und Mütschele

(57) **Zusammenfassung**

Durch die Erfindung wird eine elektrische Maschine (11), insbesondere für Fahrstuhlantrieb, geschaffen, die einen feststehenden innenliegenden Stator (12) und einen im wesentlichen das Maschinengehäuse bildenden rotierenden Außenläufer (13) aufweist, welcher den Stator übergreift und an seinen beiden Enden gelagert ist. Dabei stehen Stator und Außenläufer über einen sie radial trennenden, axial verlaufenden Luftspalt (36) in elektromagnetisch induzierter Verbindung zueinander, wobei innerhalb des Maschinengehäuses zwischen Stator und Außenläufer eine Bremseinrichtung (40) angeordnet ist, wodurch diese vor äußeren Einwirkungen wie beispielsweise Verunreinigungen geschützt ist und eine sehr kompakte Maschinenbauweise erreicht wird. Auf einen Abschnitt des Außenläufers kann eine Seiltrommel (23) aufgesetzt sein, vorzugsweise außerhalb des Bereichs des Luftspalts, unter der bevorzugt die Bremseinrichtung sitzt. Die Bremseinrichtung kann als Lamellenbremse ausgeführt sein, wobei Schraubenfedern (56) zum Schließen und Spulen (59) bzw. Elektromagnete zum Lösen der Bremse vorgesehen sein können.

## Beschreibung

### ANWENDUNGSGEBEIT UND STAND DER TECHNIK

Die Erfindung betrifft eine elektrische Maschine, insbesondere für einen Fahrstuhlantrieb, mit einem feststehenden innenliegenden Stator und einem im wesentlichen das Maschinengehäuse bildenden rotierenden Außenläufer, der zumindest teilweise den Stator übergreift und im äußeren Bereich seiner axialen Ausdehnung gelagert ist, wobei Stator und Außenläufer über einen sie radial trennenden, aber in axialer Richtung verlaufenden Luftspalt in elektromagnetisch induzierter Verbindung zueinander stehen (Radialfeldmotor).

Eine elektrische Maschine dieser Art geht aus der US-PS 4 960 186 hervor, die gemäß der darin beschriebenen Ausführung nur an einem Ende des Außenläufers gelagert ist. Dadurch können vor allem beim Anlaufen der Maschine Probleme wie beispielsweise axiale Kippmomente oder ungleichmäßige Beanspruchung der Lagerung entstehen, die den Einsatz einer darin beschriebenen Maschine erschweren bzw. problematisch machen können. In dieser Schrift ist außerdem als Stand der Technik eine Maschine beschrieben, die an beiden Enden des Außenläufers gelagert ist und eine außenliegende Bremse aufweist.

Die EP 631 967 beschreibt einen Antriebsscheibenaufzug, der eine sehr flache Antriebsmaschine aufweist. Hier bildet der Stator das Maschinengehäuse mit einer radial innen liegenden Statorspule, wobei auf dem Umfang des Läufers die Aufzugsseile gelagert sind. Der Läufer weist nur ein seitliches Lager auf. Gemäß einer zweiten Ausführungsvariante ist eine flache Antriebsmaschine als Scheibenmotor ausgeführt, bei dem die Aufzugseile an einer innerhalb der Läuferspule an dem innenliegenden Motorteil angebrachten Antriebsscheibe aufgehängt sind.

### AUFGABE UND LÖSUNG

Aufgabe der Erfindung ist es, eine elektrische Maschine insbesondere für einen Fahrstuhlantrieb, zu schaffen, die die Probleme des Standes der Technik vermeidet, insbesondere eine erhöhte Betriebssicherheit sowie verringerte Wartungsanfälligkeit in einer kompakten Bauweise gewährleistet und vielseitig einsetzbar ist.

Diese Aufgabe wird durch Anspruch 1 gelöst. Der rotierende außenliegende Läufer weist den Vorteil auf, daß er zur verbesserten Kühlung Kühlluft selber durchwirbelt. Eine in dem Maschinengehäuse angeordnete Bremseinrichtung ist sowohl vor Beschädigung als auch Verschmutzung geschützt. Bevorzugt liegt die Bremseinrichtung außerhalb eines Motorteils, der insbesondere den von dem Luftspalt umgebenen zylinderförmigen Raum umfassen kann. Durch die räumliche Trennung der Bremseinrichtung von dem Motorteil wird ein größerer Gestaltungsspielraum für die Bremseinrichtung geschaffen sowie deren Zugänglichkeit verbessert. Darüber hinaus kann der Motorteil besser vor Abriebspartikeln der Bremseinrichtung o. dgl. geschützt werden.

Besonders bevorzugt ist die Bremseinrichtung im Bereich eines bzw. radial innerhalb eines mit dem Außenläufer gekoppelten Treibrades zum Antrieb des Seils angeordnet, wobei die Bremseinrichtung direkt oder indirekt teilweise mit dem Treibrad verbunden sein kann. Die Bremse kann an dem Treibrad direkt abgestützt sein und so beim Bremsen entstehende Kräfte zwischen bewegter Fahrstuhlkabine und fester Halterung der Maschine übertragen.

Die Bremseinrichtung kann Bremsflächen aufweisen, die jeweils dem Stator und dem Außenläufer zugeordnet sind, vorzugsweise jeweils in mindestens vier Ebenen für Stator und Außenläufer. Die Bremsflächen können vorteilhaft zumindest teilweise bewegbar bzw. beweglich sein, wobei sie insbesondere durch Bremsdruck bzw. eine Andruckkraft in axialer Richtung der Maschine gegeneinander gedrückt werden können. Durch die größere Anzahl von Bremsflächen kann zum einen die Bremswirkung erhöht werden, und zum anderen entstehen bei einer Bremsung bei sich bewegender Fahrstuhlkabine aufgrund der großen gesamten Bremsfläche keine oder geringere Überhitzungsprobleme der Bremseinrichtung. Bevorzugt können die Bremsflächen über einen gewissen Bereich verschiebbar sein, insbesondere in axialer Richtung. Dazu können sie zumindest teilweise frei beweglich gehaltert bzw. gelagert sein und im getrennten Zustand einen gewissen Abstand zu der jeweils korrespondierenden Fläche aufweisen.

Bevorzugt sind die Bremsflächen des Stators und/oder des Außenläufers in Umfangsrichtung verlaufend im wesentlichen mit Kreisringoberflächen ausgebildet, wobei die Kreisringe insbesondere in mehrere Kreisringsektoren unterteilt sein können. Diese können jeweils in etwa gleich groß sein und bei einer besonders bevorzugten Ausführung der Erfindung unabhängig voneinander im Bereich der gleichen Bremsfläche bewegbar sein. Dies ermöglicht beispielsweise eine Aufteilung der Bremseinrichtung in zwei oder mehr Teile, die einzeln oder in Gruppen betätigbar sind.

Besonders bevorzugt können die Bremsflächen auf Kreisringscheiben angeordnet sein, wobei vorzugsweise zwei Bremsflächen auf Vorderseite und Rückseite jeweils einer Kreisringscheibe ausgebildet sein können. Eine bevorzugte Ausgestaltung kann vorsehen, daß mehrere Kreisringscheiben an Stator und Außenläufer abwechselnd ineinandergreifend als Lamellenbremse ausgebildet sind, wobei vorzugsweise wenigstens eine Kreisringscheibe axial fest abstützbar ist. Bevorzugt wird eine Abstützung an dem Stator, wobei diese fest abstützbare Kreisringscheibe an einem Ende der Lamellenbremse angeordnet sein kann und nur an der zu der Lamellenbremse weisenden Seite mit einer Bremsfläche versehen ist. Somit braucht nur von einer Seite auf die Lamellenbremse eine Andruckkraft ausgeübt zu werden.

Eine Betätigungseinrichtung für die Bremseinrichtung ist bevorzugt an dem Stator angeordnet, wobei sie vorzugsweise eine Schließvorrichtung zum Schließen der Bremseinrichtung, vor allem durch Ausüben der Andruckkraft, und wenigstens eine Lösevorrichtung zum Lösen der Bremseinrichtung aufweisen kann. Diese Vorrichtungen umfassen bevorzugt jeweils Schließelemente und/oder Löseelemente. Besonders bevorzugt weist die Schließvorrichtung wenigstens ein elastisches mechanisches Schließelement zum Aufbringen der Andruckkraft auf. Dessen Wirkungsrichtung verläuft vorteilhaft axial und insbesondere durch die Bremsflächen hindurch, um die Andruckkraft möglichst gleichverteilt auf die Bremsflächen zu bringen. Als besonders vorteilhaft wird eine Ausbildung der Schließelemente als Schraubenfeder oder Spiralfeder angesehen. Die Sicherheitsfunktion der Bremseinrichtung kann verbessert werden, wenn die Schließvorrichtung bzw. die Schließelemente eine permanente Andruckkraft auf die Bremseinrichtung ausüben, so daß sich beispielsweise Federn permanent in vorgespannter Anlage gegen die Bremsflächen befinden. Zur besseren Verteilung der Andruckkraft können mehrere Schließelemente in Umfangsrichtung gleichmäßig verteilt vorgesehen sein, und ihre Wirkungsrichtungen insbesondere durch den äußeren Bereich der Bremsflächen des Stators verlaufen. Bei unterteilten Bremsflächen ist bevorzugt pro Segment ein Schließelement vorhanden.

Die Lösevorrichtung kann wenigstens ein Löseelement aufweisen, bevorzugt ein elektromechanisches Löseelement, das als Elektromagnet ausgebildet sein kann. Eine bevorzugte Ausbildung sieht eine im wesentlichen in Umfangsrichtung gewickelte und/oder in axialer Richtung verlaufende Spule vor, wobei sie vorzugsweise in geringem Abstand zu wenigstens einem Schließelement der Schließvorrichtung angeordnet sein kann. Es können entweder eine umlaufende Spule oder zwei voneinander getrennte, parallel umlaufende Spulen vorhanden sein. Bevorzugt umgibt wenigstens ein Löseelement zumindest ein Schließelement, wobei in besonders bevorzugter Ausgestaltung alle Schließelemente von Löseelementen umgeben sind. Dies ermöglicht eine direktere Übertragung der Lösekraft von den Löseelementen auf die Schließelemente, vorzugsweise über eine Andruckfläche, so daß im normalen Betriebszustand der Maschine als Folge einer fehlenden Andruckkraft die Bremsflächen zueinander beabstandet sind und kein Bremsmoment aufbringen.

Zur weiteren Verbesserung der Funktion können zusätzliche Lösemittel zum Lösen der Bremseinrichtung vorgesehen sein, die vorzugsweise als mechanische Lösemittel ausgebildet sein und insbesondere ein Kraftübertragungselement aufweisen können, das in zumindest einer Längsrichtung Kräfte übertragen kann. Besonders bevorzugt sind derartige zusätzliche Lösemittel bei einer elektromechanischer Lösevorrichtung, da beispielsweise bei einem Stromausfall die elektrisch betätigte Lösevorrichtung ausfällt, die Bremseinrichtung aktiviert ist und die Bremse schließt. Um auch noch in einem solchen Fall, beispielsweise einer sogenannten "Not- oder Evakuierungsfahrt" des Fahrstuhls, die Bremse lösen zu können, sind mechanische, beispielsweise manuell betätigte, Lösemittel besonders vorteilhaft. Das Kraftübertragungselement kann als Bowdenzug ausgebildet sein, welcher durch eine Axialbohrung in der innenliegenden Statorwelle aus der Maschine zur externen Betätigung herausgeführt sein kann. Somit wird es einer Bedienungsperson ermöglicht, ohne größeren Aufwand oder gar Eingriff in das Innere der elektrischen Maschine die Bremseinrichtung zu lösen.

Bevorzugt liegt ein Angriffspunkt für die von den zusätzlichen Lösemitteln übertragenen Kraft an der Bremseinrichtung im Bereich der Lösevorrichtung. So können die zusätzlichen Lösemittel ähnlich wie die Lösevorrichtung bzw. deren Löseelemente wirken. Für das wenigstens eine Kraftübertragungselement kann eine Umlenkungseinrichtung vorgesehen sein, vorzugsweise wenigstens eine Umlenkrolle oder ein Umlenkhebel. Diese können es ermöglichen, das im Außenbereich der Bremseinrichtung angreifende Kraftübertragungselement im zentralen Bereich der Maschine aus dieser hinauszuführen.

Zumindest ein Teil der Erzeugung der elektromagnetischen Induktion in dem Luftspalt kann über eine elektrische Spule erfolgen, die insbesondere an dem Stator angeordnet ist, bevorzugt als Statorwicklung, wobei die Längsachse dieser Spule in axialer Richtung der Maschine verläuft. Eine bevorzugte Polzahl liegt bei 24 oder darüber. Eine Stromversorgung der Statorspule oder Statorwicklung kann durch den Stator verlaufen, insbesondere durch eine Statorwelle, in der vorzugsweise ein Kanal für Kabel und eventuell weitere Zuleitungen ausgebildet ist, die auf diesem Weg aus der Maschine herausgeführt sind.

In weiterer Ausgestaltung kann die Maschine mit wenigstens einem Permanentmagneten versehen sein, beispielsweise aus NdFeB-Material, wobei er vorzugsweise eine geringe radiale Dicke aufweist. Zur Einsparung von Gewicht sowie zu bewegender Masse kann der wenigstens eine Permanentmagnet an dem Außenläufer angeordnet sein. Auf diese Weise kann die Masse des Außenläufers, der einen größeren Radius aufweist als der innenliegende Stator, gering gehalten werden. Aus Fertigungsgründen ist er vorzugsweise in kleinere Abschnitte unterteilt, die in sich anschließender Anordnung verteilt sind.

Bei einer bevorzugten Ausgestaltung der Erfindung kann das Treibrad als Seiltrommel mit mehreren außenliegenden und in Umfangsrichtung verlaufenden Rillen zur Aufnahme wie zum Antrieb des Seils bzw. eines daran befestigten Fahrstuhls durch Reibschluß ausgebildet sein. Besonders bevorzugt ist die Seiltrommel direkt an der elektrischen Maschine befestigt, insbesondere an dem Außenläufer ohne ein Getriebe o.dgl. Um in der Dimensionierung des Durchmessers frei zu sein kann sie axial versetzt zu dem Motorteil bzw. dem von dem Luftspalt umgebenen Raum angeordnet sein. Insbesondere kann sie einen geringeren Durchmesser als der Luftspalt aufweisen, wodurch sich eine höhere Umdrehungszahl des Motors bei einer bestimmten Fahrstuhlgeschwindigkeit realisieren läßt. Die Seiltrommel kann auf einen Abschnitt des Außenläufers bzw. dessen Gehäuses aufgesetzt sein, vorzugsweise an einem Ende des Außenläufers. Besonders bevorzugt ist die Seiltrommel durch den Außenläufer radial direkt abgestützt, insbesondere durch seine scheibenförmige Stirnfläche, was ein weiterer Vorteil der axialen Versetzung der Seiltrommel ist. Gemäß einer anderen Ausgestaltung kann die Seiltrommel von dem Außenläufer gebildet sein, insbesondere von einem Teil seiner Außenfläche, entweder von dem Motorteil oder vorzugsweise von einem Ende des Außenläufers.

Besonders bevorzugt ist eine Lagerung für den Außenläufer in dem von der Seiltrommel umgebenen Bereich angeordnet, insbesondere außerhalb des Motorteils. Eine derartige direkte Abstützung der Seiltrommel an der Lagerung und somit dem Stator kann besonders gut die durch das Seil auftretenden Kräfte in radialer Richtung aufnehmen, so daß es weder zu einem Einbeulen der Seiltrommel noch zu einer Dezentrierung der Maschine kommen kann. Besonders bevorzugt ist der Außenläufer im Bereich seiner beiden Enden gelagert, insbesondere mit Wälzlagern, wobei eine Anbringung der Lager an den beiden Enden des Stators besonders bevorzugt ist.

An dem Außenläufer, insbesondere an einem an das Treibrad angrenzenden Bereich, kann eine in Umfangsrichtung umlaufende Verzahnung, vorzugsweise ein Zahnkranz, vorgesehen sein. Die Zähne selber können axial oder leicht schräg axial verlaufen. Der Zahnkranz kann an dem Außenläufer angeformt sein oder als separates Bauteil angebracht werden. An die Verzahnung ist, bevorzugt über ein axial bewegliches Zahnrad oder Ritzel, ein Notantriebsmotor ankoppelbar, beispielsweise über einen Magnetantrieb, ähnlich wie bei einem Anlasserritzel für einen KFZ-Motor. Der Notantriebsmotor, der vorzugsweise als Gleichstrommotor ausgeführt ist, überträgt beispielsweise für eine sogenannte Not- oder Evakuierungsfahrt seine Antriebskraft auf den Außenläufer bzw. treibt die Maschine an. Der Notantriebsmotor kann über eine Batterie oder einen Akkumulator gespeist werden, wobei seine Leistung, eventuell bei Überlastung, lediglich für einen kurzen Betrieb ausgelegt sein kann.

Ein weiteres Anwendungsgebiet der Erfindung kann auf dem Gebiet der Druckmaschinen liegen, insbesondere als Antrieb für Druckwellen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Ein bevorzugtes Ausführungsbeispiel der Erfindung ist in den Zeichnungen dargestellt und wird im folgenden näher erläutert. Dabei zeigen:
- Fig. 1: einen seitlichen Teilschnitt durch eine erfindungsgemäße elektrische Maschine,
- Fig. 2: eine Vorderansicht der elektrischen Maschine aus Fig. 1 mit einer Halterung für den Stator sowie der Seiltrommel und
- Fig. 3: einen detaillierten seitlichen Teilschnitt der Maschine aus Fig. 1, bei der die erfindungsgemäße Anordnung und Ausbildung der Bremseinrichtung deutlich wird.

### BESCHREIBUNG EINES BEVORZUGTEN AUSFÜHRUNGSBEISPIELS

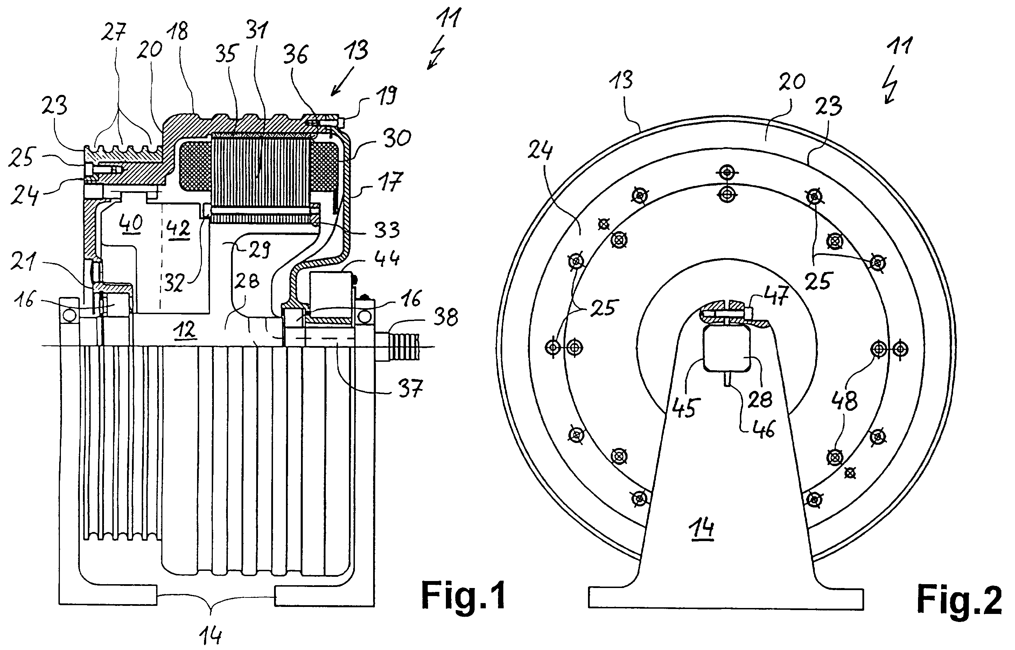

Die Fig. 1 zeigt eine erfindungsgemäße elektrische Maschine 11, die aus einem feststehenden Stator 12 und einem um den Stator rotierenden Außenläufer 13 besteht. In der Fig. 1 ist der Stator 12 an seinen beiden äußeren Enden an zwei Lagerböcken 14 gehaltert, mittels derer er auf einem Träger oder eine Trägerplatte befestigt werden kann, vorzugsweise durch Verschraubung. Selbstverständlich bieten sich sämtliche Möglichkeiten an der Lagerung, abweichend von der in der Fig. 1 gezeigten, an.

Mittels zweier Lager 16, die vorzugsweise als Rollenlager bzw. Rillenkugellager ausgeführt sind, ist der Außenläufer 13 drehbar auf dem Stator 12 gelagert. Von dem rechten Lager 16 aus erstreckt sich eine vordere Gehäuseschale 17 zuerst radial nach außen, um dann mit einem in etwa rechtwinkligen Knick die Länge des Außenläufers vergrößernd ein Stück in Richtung zu dem rechten Lagerbock 14 so weit zu verlaufen, bis es diesen beinahe erreicht und von sich da an mit einem erneuten Knick in radialer Richtung bis zu dem Außendurchmesser erstreckt. In diesem Bereich ist die vordere Gehäuseschale 17 mit einer hinteren Gehäuseschale 18 durch stirnseitige Gehäuseschrauben 19 verbunden. Die hintere Gehäuseschale 18 verläuft in axialer Richtung den Stator 12 übergreifend über etwa zwei Drittel der Länge des Außenläufers 13, um dann in eine Durchmesserverengung 20 überzugehen. Vom linken Ende der Durchmesserverengung 20 läuft die Gehäuseschale radial nach innen und mündet in eine Aufnahme 21 für das linke Lager 16.

Während die Außenseite des Abschnitts der hinteren Gehäuseschale 18 mit größerem Durchmesser in Umfangsrichtung verlaufende Kühlrippen zur verbesserten Wärmeabfuhr aufweist, ist auf den Abschnitt der Durchmesserverengung 20 eine Seiltrommel 23 aufgesetzt. Mittels eines radial nach innen reichenden Absatzes 24 liegt sie in einer umlaufenden Ecknut der Durchmesserverengung 20 an, wobei die Stirnseite Bohrungen zur Aufnahme von Seiltrommelschrauben 25, die in axialer Richtung verlaufend in die hintere Gehäuseschale 18 eingreifen, aufweist. Stirnseitig schließen Seiltrommel 23 und hintere Gehäuseschale 18 den Außenläufer 13 in etwa bündig ab. An ihrer Außenseite ist die Seiltrommel 23 mit mehreren in Umfangsrichtung verlaufenden Rillen 27 versehen, die zur Aufnahme eines Seils vorgesehen sind, an dem eine Fahrstuhlkabine befestigt ist.

Der Stator 12 weist ausgehend von einer Welle 28, deren Enden in den Lagerblöcken 14 gehaltert sind, im mittleren Bereich einen radial abstehenden Träger 29 auf, der an seinem Außenquerschnitt die Statorwicklung 30 trägt. Die Statorwicklung 30 ist in einem Blechpaket 31 angeordnet, welches mittels einer durchgängigen Schraube 32 mit einem radial abstehenden Befestigungsansatz 33 des Trägers 29 verschraubt ist. Auf diese Weise stellt die Schraube 32 nicht nur den Zusammenhalt des Blechpakets 31 sicher, sondern sorgt darüber hinaus für die Drehmomentübertragung sowie eine exakte Positionierung der Statorwicklung. Mehrere Spulen der Wicklung, abhängig von der Polzahl, sind in Umfangsrichtung verteilt angeordnet. Die Statorwicklung 30 nimmt den gesamten Längsbereich des Außenläufers 13 im Bereich des weiten Durchmessers ein und weist in axialer Richtung nur geringen Abstand zu der Innenseite der vorderen Gehäuseschale 17 sowie der hinteren Durchmesserverengung 20 auf.

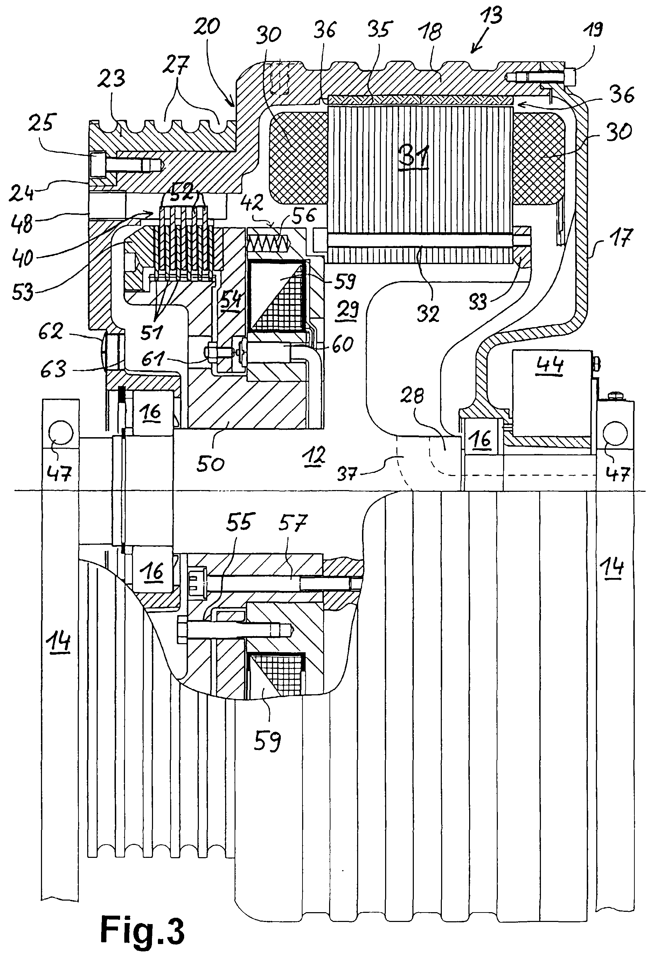

An der Innenseite des Gehäuses des Außenläufers 13 sind zu der Ausdehnung des Blechpakets 31 korrespondierende Permanentmagnete 35 befestigt, beispielsweise eingeklebt, die lediglich durch einen schmalen Luftspalt 36 vom Blechpaket des Stators getrennt sind. Der Luftspalt 36 läßt sich besser in der vergrößerten Darstellung in Fig. 3 erkennen. Über einen zentralen Kanal 37, der gestrichelt dargestellt ist, können die elektrischen Zuleitungen von der Statorwicklung 30 und Bremslüftspule mittels nicht dargestellter Kabel aus der Maschine 11 in einem Kabelschlauch 38 herausgeführt und an eine Motorsteuerung angeschlossen werden. Diese entspricht einer üblichen Steuerung für einen elektronisch kommutierten Motor.

An den Träger 29 schließt sich nach links an den Stator 12 die Bremseinrichtung 40 an, wobei die Betätigungseinrichtung 42 bis an den Träger 29 reicht. Für eine detailliertere Darstellung der Bremse wird auf Fig. 3 verwiesen.

In der axialen Einbuchtung der vorderen Gehäuseschale 17 ist an der Gehäuseschale 17 bzw. an dem rechten Lagerbock 14 ein Hohlwellen- bzw. Drehgeber 44 angeordnet, der Drehzahl und Lage des Außenläufers 13 in Relation zu dem Stator ermittelt und als Signale an eine Motorsteuerung gibt. Die Signale werden auch für die Strom-Kommutierung benötigt.

Die Fig. 2 zeigt eine Ansicht der erfindungsgemäßen Maschine 11 von der Stirnseite der hinteren Gehäuseschale 18. Es ist deutlich zu sehen, wie das in Fig. 1 linke Ende der Welle 28 des Stators mit etwas abgeflachtem Querschnitt in einer entsprechenden Aufnahmeausnehmung 45, die einen mittigen senkrechten Schlitz 46 aufweist, aufgenommen ist. Oberhalb der Aufnahmeausnehmung verläuft eine Befestigungsschraube 47 durch die beiden von dem Schlitz getrennten Abschnitte des Lagerbocks 14 um diese gegeneinander zu verpressen und somit das Wellenende sicher in der Aufnahmeausnehmung 45 zu halten.

Auf den mit verringertem Durchmesser ausgeführten Abschnitt 20 der hinteren Gehäuseschale 18 ist die Seiltrommel 23 aufgesetzt, wobei durch den Absatz 24 die Seiltrommelschrauben 25 geführt sind und in das Gehäuse des Außenläufers eingreifen. Auf einem etwas kleineren Kreis als dem der Seiltrommelschrauben 25 sind Lagerbolzen 48 in den Außenläufer 13 geführt, deren Aufgabe weiter unten bei der Beschreibung der Bremse erläutert wird.

Die Fig. 3 zeigt einen Schnitt ähnlich wie Fig. 1, allerdings vergrößert und detaillierter. An der Fig. 3 soll vor allem der Aufbau der Bremse erläutert werden. Die Bremse weist einen Bremssattel 50 auf, der sowohl die Bremseinrichtung 40 als auch die Betätigungseinrichtung 42 trägt. An dem Bremssattel 50 sind sechs Statorbremslamellen 51 in Form von Kreisringscheiben angeordnet, in deren radial inneren Teil bzw. darin ausgebildete Ausnehmungen der Bremssattel eingreift und sie dadurch bei axialer Beweglichkeit in Umfangsrichtung drehfest gelagert sind. Derartige drehfeste Schiebelagerungen können in Umfangsrichtung mehrfach verteilt an dem Bremssattel zur Lagerung der Statorbremslamellen 51 vorgesehen sein.

In die zwischen den Statorbremslamellen 51 gebildeten Zwischenräume greifen Rotorbremslamellen 52 ein, die ähnlich wie die Statorbremslamellen als Kreisringscheiben ausgeführt sind. Ebenso kann die Lagerung, die gleichfalls eine axiale Verschiebbarkeit sowie eine Verdrehsicherung aufweist, aufgeführt sein. Dazu greift der Lagerbolzen 48 in den Außenläufer 13 und in dem Querschnitt des Lagerbolzens angepaßte Ausnehmungen im Außenbereich der Rotorbremslamellen 52 ein. Während in Umfangsrichtung die Bremslamellen 51 und 52 formschlüssig an ihrer Lagerung abgestützt sind, können sie in axialer Richtung frei beweglich sein.

Am linken Ende des Bremssattels 50 ist eine Abstützung 53 als Anschlag für die von den Lamellen 51 und 52 gebildete Lamellenbremse angebracht. Über eine in Umfangsrichtung im wesentlichen durchgehende Andruckscheibe 54 wird die von Schraubenfedern 56 aufgebrachte Andruckkraft auf die Bremslamellen übertragen. Bevorzugt sind mehrere Schraubenfedern 56 als Schließvorrichtung in Umfangsrichtung verteilt angeordnet.

Die Andruckscheibe 54 ist wie die Lamellen axial frei beweglich, wobei sie durch die im unteren Teil der Fig. 3 dargestellten Schraubbolzen 55 gelagert ist. Diese Schraubbolzen 55 weisen nur an ihrem vorderen, in den feststehenden Bremssattel reichenden Ende ein Gewinde auf, während der durch die Andruckscheibe 54 verlaufende Teil mit glattem Außendurchmesser zur besseren axialen Beweglichkeit versehen ist. Ebenso sind im unteren Teil der Fig. 3 durch den Bremssattel 50 reichende Langschrauben 57 dargestellt, die in axialer Richtung durchgängig in den Träger 29 mit einem Gewinde zur Befestigung der Bremse am Stator eingreifen.

Zum Lösen der Bremse bzw. Überwinden der von den Schraubenfedern 56 aufgebrachten Andruckkraft ist eine Spule 59 in der Betätigungseinrichtung 42 vorgesehen, die radial innerhalb der Schraubenfedern 56 in Umfangrichtung verläuft. Bei Versorgung der Spule 59 mit Spannung baut diese ein Magnetfeld auf, das die Andruckscheibe 54 gegen die von den Schraubenfeden 56 ausgeübte Andruckkraft zu der Spule hinzieht. Dadurch können sich die Bremslamellen des Stators und des Rotors voneinander lösen. Die Andruckscheibe 54 kann in mehrere Teile unterteilt sein, bevorzugt in zwei Teile, die jeweils in etwa einen halbkreisförmigen Abschnitt einnehmen, insbesondere bei einer Unterteilung eines Teils der Lamellen in Umfangsrichtung in Sektoren. Mehrere Schraubenfedern 56 sowie eine Unterteilung der Bremse in mehrere sektorenförmige Abschnitte kann die Sicherheit der Bremse erhöhen. So kann beispielsweise bei einem Federbruch die Andruckkraft von den restlichen Schraubenfedern übernommen werden.

Für den Aufzugsbetrieb ist es wichtig, daß die mechanischen Schließelemente permanent die Andruckkraft für die Bremse aufbringen und nur durch die Lösevorrichtung, beispielsweise in Form von Elektromagneten, zurückgehalten werden. Beispielsweise bei einem Stromausfall fällt die Bremse automatisch ein und hält den Fahrstuhl an.

Zur Dektektierung des Zustands der Bremse ist ein Kontaktschalter 60 an dem Bremssattel 50 angeordnet, der durch eine in der Andruckscheibe 54 verlaufende Justierschraube 61 auslösbar ist. Auf diese Weise kann entweder ein Lösen der Bremse durch Anziehen der Andruckscheibe 54 gegen die Spule 59 detektiert werden oder ein Schließen der Bremse durch von den Schraubenfedern 56 ausgelöste Anlage der Andruckscheibe 54 gegen die Bremslamellen. Durch eine mittels einer Schraubkappe 62 verschließbare Justieröffnung 63 kann die Justierschraube 61 von außen eingestellt bzw. nachjustiert werden.

## Patentansprüche

1. Elektrische Maschine, insbesondere für Fahrstuhlantrieb, mit einem feststehenden innenliegenden Stator und einem im wesentlichen das Maschinengehäuse bildenden rotierenden Außenläufer, der zumindest teilweise den Stator übergreift und im äußeren Bereich seiner axialen Ausdehnung gelagert ist, wobei Stator (12) und Außenläufer (13) über einen sie in radialer Richtung trennenden, in axialer Richtung verlaufenden Luftspalt (36) in elektromagnetisch induzierter Verbindung zueinander stehen, und mit einer Bremseinrichtung (40) zwischen Stator und Außenläufer, die innerhalb des Maschinengehäuses angeordnet ist.

2. Elektrische Maschine nach Anspruch 1, dadurch gekennzeichnet, daß die Bremseinrichtung (40) außerhalb eines Motorteils liegt, wobei der Motorteil vorzugsweise den von dem Luftspalt (36) umgebenen zylinderförmigen Raum umfaßt.

3. Elektrische Maschine nach Anspruch 1 oder 2, dadurch gekennzeichnet, daß die Bremseinrichtung (40) im Bereich bzw. radial innerhalb eines mit dem Außenläufer (13) gekoppelten Treibrades zum Antrieb eines Seils o.dgl. angeordnet ist, wobei sie bevorzugt zumindest teilweise mit dem Treibrad verbunden ist.

4. Elektrische Maschine nach einem der vorhergehenden Ansprüche, dadurch gekennzeichnet, daß die Bremseinrichtung (40) Bremsflächen aufweist, die jeweils dem Stator (12) und dem Außenläufer (13) zugeordnet sind und zumindest teilweise bewegbar sind, wobei sie vorzugsweise in axialer Richtung frei bewegbar gehaltert und durch Bremsdruck in axialer Richtung der Maschine (11) gegeneinander beaufschlagbar sind.

5. Elektrische Maschine nach Anspruch 4, dadurch gekennzeichnet, daß die Bremsflächen des Stators (12) und/oder des Außenläufers (13) in Umfangsrichtung verlaufend im wesentlichen mit Kreisringoberflächen ausgebildet sind, vorzugsweise auf Kreisringscheiben angeordnet sind, wobei insbesondere die Kreisringe in mehrere Kreisringsektoren unterteilt sind, die vorzugsweise jeweils unabhängig voneinander bewegbar sind.

6. Elektrische Maschine nach Anspruch 5, gekennzeichnet durch eine Lamellenbremse mit mehreren Kreisringscheiben an Stator (12) und an Außenläufer (13), die abwechselnd ineinandergreifen, wobei vorzugsweise wenigstens eine Kreisringscheibe (53) an einem Ende der Lamellenbremse axial fest abstützbar ist, insbesondere an dem Stator.

7. Elektrische Maschine nach einem der vorhergehenden Ansprüche, dadurch gekennzeichnet, daß eine Betätigungseinrichtung (42) für die Bremseinrichtung (40) an dem Stator (12) angeordnet ist, wobei sie vorzugsweise wenigstens eine Schließvorrichtung zum Schließen der Bremseinrichtung und wenigstens eine Lösevorrichtung zum Lösen der Bremseinrichtung aufweist, die insbesondere jeweils Schließ- und/oder Löseelemente umfassen.

8. Elektrische Maschine nach Anspruch 7, dadurch gekennzeichnet, daß die Schließvorrichtung wenigstens ein elastisches mechanisches Schließelement zum Aufbringen der Andruckkraft für die Bremseinrichtung (40) aufweist, dessen Wirkungsrichtung in axialer Richtung verläuft, insbesondere durch Bremsflächen hindurch, und das vorzugsweise als Schraubenfeder (56) ausgebildet ist, wobei insbesondere die Schließvorrichtung eine permanente Andruckkraft auf die Bremseinrichtung ausübt, und vorzugsweise mehrere Schließelemente in Umfangsrichtung gleichmäßig verteilt sind.

9. Elektrische Maschine nach Anspruch 7 oder 8, dadurch gekennzeichnet, daß die Lösevorrichtung wenigstens ein elektromechanisches Löseelement aufweist, vorzugsweise einen Elektromagneten, der insbesondere als im wesentlichen in Umfangsrichtung gewickelte Spule (59) ausgebildet ist, wobei vorzugsweise das wenigstens eine Löseelement in geringem Abstand zu wenigstens einem Schließelement der Schließvorrichtung angeordnet ist.

10. Elektrische Maschine nach einem der Ansprüche 7 bis 9, gekennzeichnet durch zusätzliche Lösemittel zum Lösen der Bremseinrichtung (40), die vorzugsweise als mechanische Lösemittel ausgebildet sind und ein Kraftübertragungselement aufweisen, das aus der Maschine (11) herausgeführt ist zur externen Betätigung, wobei insbesondere ein Angriffspunkt für die von den zusätzlichen Lösemitteln übertragene Kraft an der Bremseinrichtung im Bereich der Löseelemente liegt.

11. Elektrische Maschine nach einem der vorhergehenden Ansprüche, dadurch gekennzeichnet, daß sie wenigstens eine Spule zur zumindest teilweisen Erzeugung der elektromagnetischen Induktion in dem Luftspalt (36) aufweist, die insbesondere als Statorwicklung (30) an dem Stator (12) angeordnet ist, wobei die Maschine vorzugsweise weiters wenigstens einen Permanentmagneten (35) aufweist, der an dem Außenläufer (13) angeordnet ist und eine geringe Dicke aufweist.

12. Elektrische Maschine nach Anspruch 3, dadurch gekennzeichnet, daß das Treibrad als Seiltrommel (23) mit mehreren außenliegenden, in Umfangsrichtung verlaufenden Rillen (27) zur Aufnahme des Seils sowie dessen Antrieb durch Reibschluß ausgebildet ist, wobei sie vorzugsweise axial versetzt ist zu dem Motorteil bzw. dem von dem Luftspalt (36) umgebenen Raum, insbesondere geringeren Durchmesser als der Luftspalt aufweist.

13. Elektrische Maschine nach Anspruch 12, dadurch gekennzeichnet, daß die Seiltrommel (23) auf einen Abschnitt des Außenläufers (13) übergreifend aufgesetzt ist, vorzugsweise auf ein Ende des Außenläufers, wobei sie insbesondere durch den Außenläufer radial abgestützt ist.

14. Elektrische Maschine nach Anspruch 12 oder 13, dadurch gekennzeichnet, daß wenigstens ein Lager (16) für den Außenläufer (13) in dem von der Seiltrommel (23) umgebenen Bereich angeordnet ist, wobei sich die Seiltrommel vorzugsweise über eine in radialer Richtung durchgängige Verbindung des Außenläufers an dem Lager derart abstützt, daß Lager und Seiltrommel etwa in einer Ebene liegen, in welcher der Außenläufer als eine die im wesentlichen ununterbrochene Stirnfläche des Gehäuses bildende Scheibe verläuft.

15. Elektrische Maschine nach einem der vorhergehenden Ansprüche, dadurch gekennzeichnet, daß der Außenläufer (13) an seinen beiden Enden gelagert ist, wobei die Lager (16) vorzugsweise an den beiden Enden der Statorwelle (37) des Stators (12) angeordnet sind.

16. Elektrische Maschine nach einem der vorhergehenden Ansprüche, dadurch gekennzeichnet, daß an dem Außenläufer (13), insbesondere an einem an das Treibrad angrenzenden Bereich, eine in Umfangsrichtung umlaufende Verzahnung, vorzugsweise ein Zahnkranz, verläuft, die an dem Außenläufer angeformt oder als separates Teil angebracht ist, wobei an die Verzahnung ein Notantriebsmotor mit einem insbesondere beweglichen Zahnrad ankoppelbar ist, so daß der Notantriebsmotor, eine Antriebskraft auf den Außenläufer überträgt.
